# EUROPÄISCHE PATENTANMELDUNG

(11) **EP 1 983 074 A1**
(43) Veröffentlichungstag der Anmeldung: **22.10.2008**
(21) Anmeldenummer: 07007611.2
(22) Anmeldetag: 13.04.2007
(51) Int. Cl.: C23C 22/74, C04B 28/34, C09D 5/10, F01D 5/28

(54) **Wärmehärtende Beschichtungszusammensetzung**

(71) Anmelder: SIEMENS AKTIENGESELLSCHAFT, 80333 München (DE)
(72) Erfinder: Jensen, Jens Dahl, 14050 Berlin (DE); Krüger, Ursus, 14089 Berlin (DE); Körtvelyessy, Daniel, 13469 Berlin (DE); Reiche, Ralph, 13465 Berlin (DE); Rindler, Michael, 15566 Schöneiche (DE); Winkler, Gabriele, 13587 Berlin (DE)

(57) **Zusammenfassung**

Es wird eine wärmehärtende Beschichtungszusammensetzung zur Verfügung gestellt, welche ein säurehaltiges Bindemittel und Aluminiumpartikel umfasst, wobei das Bindemittel Phosphorsäure und Wasser umfasst. Außerdem umfasst das Bindemittel einen Bestandteil, der ausgewählt ist aus der Gruppe bestehend aus Wolfram-(VI)-Verbindungen, Vanadin-(V)-Verbindungen, Niob-(V)-Verbindungen, Tantal-(V)-Verbindungen, Technetium-(VII)-Verbindungen, Rhenium-(VII)-Verbindungen und Cer-(IV)-Verbindungen sowie Gemischen aus diesen Verbindungen.

## Beschreibung

Die vorliegende Erfindung betrifft eine wärmehärtende Beschichtungszusammensetzung zum Herstellen von aluminiumhaltiger Beschichtung, insbesondere mit Korrosions- und/oder Verschleißschutzschichten, sowie eine Verwendung für derartige Beschichtungszusammensetzungen.

Aluminiumhaltige Korrosions- und/oder Verschleißschutzschichten kommen bei hoch beanspruchten Werkstückoberflächen wie etwa Kompressorschaufeln zum Einsatz. Das Aluminium dient dabei als ein Opferanodenmaterial, welches zusammen mit dem Basismaterial der beschichteten Kompressorschaufel bei Vorhandensein von Feuchtigkeit eine galvanische Zelle bildet, in der das Aluminium oxidiert wird.

Das Aufbringen der aluminiumhaltigen Korrosions- und/oder Verschleißschutzschichten erfolgt heutzutage insbesondere für Kompressorschaufeln, wie sie in Gasturbinenanlagen zum Einsatz kommen, durch Aufspritzen. Typischerweise werden spritzbare Suspensionen durch Mischen von Phosphorsäure, Wasser, Aluminium und Chrom(IV)-Oxide hergestellt. Alternativ zu den Chrom-(VI)-Oxiden kommen auch Molybdän-(VI)-Oxide zum Einsatz. Beide Stoffe können die Spritzfähigkeit der aluminiumhaltigen Beschichtungszusammensetzung sicherstellen und beeinflussen die Viskosität der Zusammensetzung stark. Die Ursache hierfür ist, dass die beiden Oxide verhindern, dass eine auf den Aluminiumpartikeln gebildete Oxidschicht von der Phosphorsäure angegriffen wird. Ein Entfernen der Oxidschicht durch die Phosphorsäure würde dazu führen, dass das Aluminium zuerst mit der Säure reagiert und anschließend das verbleibende Aluminium mit Wasser zu Aluminiumhydroxid reagiert. Als Folge davon käme es zu einer Verfestigung der Mischung, so dass diese nicht mehr spritzbar wäre. Spritzbare Suspensionen mit Chrom-(VI)-Oxiden oder Molybdän-(VI)-Oxiden sind in US 3,248,251 beschrieben.

Auf Grund der toxischen Eigenschaften der Chrom-(VI)-Oxide ist man bestrebt, Alternativen zu diesen Oxiden zu finden. In EP 0 905 279 A1 ist beispielsweise eine nitrathaltige Zusammensetzung für eine wärmehärtende Schutzschicht beschrieben, die eine wässrige Lösung von Phosphat-Ionen und Nitrat-Ionen und mindestens eine Art von Metallionen mit einer Wertigkeit größer als +1 umfasst. Die Metallionen können insbesondere aus der Gruppe ausgewählt sein, die aus Aluminiumionen, Manganionen, Magnesiumionen, Cerionen, Kobaltionen, Chrom-(III)-Ionen, Nickelionen, Eisenionen, Kupferionen und Zinkionen besteht. Die Metallionen sollen die Bildung einer harten, glatten und glänzenden Beschichtung fördern.

Aufgabe der vorliegenden Erfindung ist es, eine vorteilhafte wärmehärtende Beschichtungszusammensetzung sowie eine vorteilhafte Verwendung für eine derartige wärmehärtende Beschichtungszusammensetzung zur Verfügung zu stellen.

Diese Aufgabe wird durch eine wärmehärtende Beschichtungszusammensetzung nach Anspruch 1 und eine Verwendung nach Anspruch 12 gelöst. Die abhängigen Ansprüche enthalten vorteilhafte Ausgestaltungen der Erfindung.

Eine erfindungsgemäße wärmehärtende Beschichtungszusammensetzung umfasst ein säurehaltiges Bindemittel und Aluminiumpartikel. Das Bindemittel umfasst Phosphorsäure und Wasser. Außerdem umfasst das Bindemittel einen Bestandteil, der ausgewählt ist aus der Gruppe bestehend aus Wolfram-(VI)-Verbindungen, Vanadin-(V)-Verbindungen, Niob-(V)-Verbindungen, Tantal-(V)-Verbindungen, Technetium-(VII)-Verbindungen, Rhenium-(VII)-Verbindungen und Cer-(IV)-Verbindungen sowie Gemischen aus diesen Verbindungen.

Die erfindungsgemäße Beschichtungszusammensetzung ermöglicht es, sowohl auf die toxischen Chrom-(IV)-Oxide als auch auf die Molybdän-(VI)-Oxide zu verzichten. Stattdessen werden diese Oxide bzw. ihre Säuren erfindungsgemäß durch einen Bestandteil der genannten Gruppe ersetzt. Alle in der Gruppe aufgezählten Verbindungen bzw. Gemische davon können die Spritzfähigkeit der aluminiumhaltigen Suspension gewährleisten. Die natürliche Oxidhülle der Aluminiumteilchen wird vor dem Angriff des säurehaltigen Bindemittels geschützt, so dass es zu keiner exothermen Reaktion kommt, die eine hochviskose bis sehr feste poröse Masse, die nicht mehr spritzfähig ist, entstehen lassen würde. Dabei unterdrücken die genannten Verbindungen die chemische Umsetzung der Aluminiumpartikel zu Aluminiumhydroxid oder Aluminiumoxid. Stattdessen bleiben die Aluminiumpartikel nahezu vollständig erhalten.

Zudem führt die Verwendung der genannten Verbindungen dazu, dass sich das Bindemittel bei Zugabe eines Reduktionsmittels, das im vorliegenden Fall durch die Aluminiumpartikel gegeben ist, färbt. Je nachdem, welche Verbindung aus der Gruppe zur Anwendung kommt, ergibt sich ein anderer Farbumschlag des Bindemittels beim Zusatz der Aluminiumpartikel. Durch geeignete Auswahl der Verbindungen bzw. von Gemischen aus diesen Verbindungen lassen sich somit Beschichtungen mit einer Vielzahl unterschiedlicher Farben herstellen. Dies ermöglicht eine umfassende Farbkodierung einer bspw. auf ein Turbinenbauteil wie etwa eine Verdichterschaufel aufgebrachten Beschichtung. Es lassen sich somit bspw. Beschichtungen für unterschiedliche Verdichterschaufeln oder unterschiedliche Schichten in einer Beschichtung farblich kennzeichnen.

Die Wolfram-(VI)-Verbindungen können in der erfindungsgemäßen Beschichtungszusammensetzung insbesondere Wolframsäure (H₂WO₄) oder Wolframat (WO₄2-) umfassen. Die Vanadin-(V)-Verbindungen können insbesondere Vanadinpentoxid (V₂O₅), die Niob-(V)-Verbindungen insbesondere Niobpentoxid (Nb₂O₅) und die Tantal-(V)-Verbindungen insbesondere Tantalpentoxid (Ta₂O₅) umfassen. Die Technetium-(VII)-Verbindungen können insbesondere Ditechnetiumheptoxid (Tc₂O₇) und/oder Pertechnat (TcO₄-) und die Rhenium-(VII)-Verbindungen insbesondere Dirheniumheptoxid (Re₂O₇) und/oder Perrhenat (ReO₄-) umfassen. Die Cer-(IV)-Verbindungen können insbesondere Ceroxid (CeO₂) umfassen. Die genannten Verbindungen eignen sich besonders zur Verwendung im Bindemittel der erfindungsgemäßen Beschichtungszusammensetzung.

Die wärmehärtende Beschichtungszusammensetzung kann außerdem wenigstens ein Metalloxid umfassen, das insbesondere ausgewählt sein kann aus der Gruppe bestehend aus Magnesiumoxid (MgO), Aluminiumoxid (Al₂O₃), Titanoxid (TiO₂), Zinkoxid (ZnO) und Zirkonoxid (ZrO₂) sowie Gemischen aus diesen Oxiden. Alle die genanten Metalloxide sind weiße bzw. farblose Pulver, die als Trägermaterial für die beim Farbumschlag im Bindemittel entstehenden Farbpigmente dienen können. Das Metalloxid kann hierbei im Form von Nanoteilchen und/oder in Form von Mikroteilchen vorliegen. Insbesondere Gemische aus Nano- und Mikroteilchen ermöglichen die Herstellung von besonders glatten und kompakten Schichten.

Als einen weiteren, zusätzlichen Bestandteil kann die wärmehärtende Beschichtungszusammensetzung zusätzlich Molybdän-(VI)-Oxide bzw. Molybdänsäure umfassen. Diese ermöglichen neben einem Oxidationsschutz für die Aluminiumpartikel eine intensive blaue Farbgebung.

Die erfindungsgemäße wärmehärtende Beschichtungszusammensetzung kann in dem bisher verwendeten Herstellungsprozess für aluminiumhaltige Schichten verwendet werden. Ein Verzicht auf die toxischen Chrom-(VI)-Oxide zum Schutz der Aluminiumpartikel vor Oxidation lässt sich daher problemlos realisieren.

In der Verwendung der erfindungsgemäßen wärmehärtenden Beschichtungszusammensetzung wird diese zur Herstellung einer Beschichtungsschicht, etwa einer Haftvermittlerschicht und/oder einer Korrosionsschutzschicht und/oder einer Verschleißschutzschicht, auf einem Turbinenbauteil mittels eines Spritzverfahrens herangezogen. Der neben der Phosphorsäure und dem Wasser in dem Bindemittel vorhandene Bestandteil aus der genannten Gruppe stellt hierbei die Spritzfähigkeit der Beschichtungsuzammensetzung sicher. Ein gezieltes Auswählen des Bestandteils aus der Gruppe kann in der erfindungsgemäßen Verwendung erfolgen, um die Farbe der Beschichtungszusammensetzung gezielt einzustellen. Dadurch wird es möglich, die Beschichtungszusammensetzung durch eine spezielle Farbgebung zu kennzeichnen und so bspw. ihre Handhabung zu vereinfachen, etwa im Hinblick auf die Auswahl der richtigen Beschichtungszusammensetzung für eine spezielle Verdichterschaufel.

Die erfindungsgemäße Verwendung ermöglicht außerdem das Herstellen vom kompakten Schichten mit geringen Rauheiten, insbesondere dann, wenn die Trägerpartikel für die beim Farbumschlag entstehenden Farbpigmente als ein Gemisch aus nanoskaligen und mikroskaligen Partikeln ausgebildet sind.

In einer besonders vorteilhaften Verwendung der erfindungsgemäßen wärmehärtenden Beschichtungszusammensetzung werden zwei wärmehärtenden Beschichtungszusammensetzungen mit unterschiedlicher Farbe zur Herstellung einer ersten Beschichtungsschicht und einer zweiten Beschichtungsschicht herangezogen. Die erste Beschichtungsschicht weist eine erste Farbe auf und wird bspw. direkt auf ein zu beschichtendes Turbinenbauteil aufgebracht. Die zweite Beschichtungsschicht, die eine andere Farbe als die erste Beschichtungsschicht aufweist, wird dann auf die erste Beschichtungsschicht aufgebracht. Wenn nun bei einer Inspektion des Bauteils nach einer bestimmten Betriebsdauer die Farbe der ersten, unteren Beschichtungsschicht zu sehen ist, zeigt dies an, dass die äußere Beschichtungsschicht weitgehend verschlissen ist. Eine Verschleißprüfung alleine durch optisches Begutachten des Bauteils ist dann in einfacher Weise möglich.

Weitere Merkmale, Eigenschaften und Vorteile der vorliegenden Erfindung ergeben sich aus der nachfolgenden Beschreibung von Ausführungsbeispielen unter Bezugnahme auf die beiliegende Figuren.
Figur 1 zeigt beispielhaft eine Gasturbine 100 in einem Längsteilschnitt.
Figur 2 zeigt in perspektivischer Ansicht eine Laufschaufel 120 oder Leitschaufel 130 einer Strömungsmaschine
Figur 3 zeigt eine Brennkammer 110 einer Gasturbine

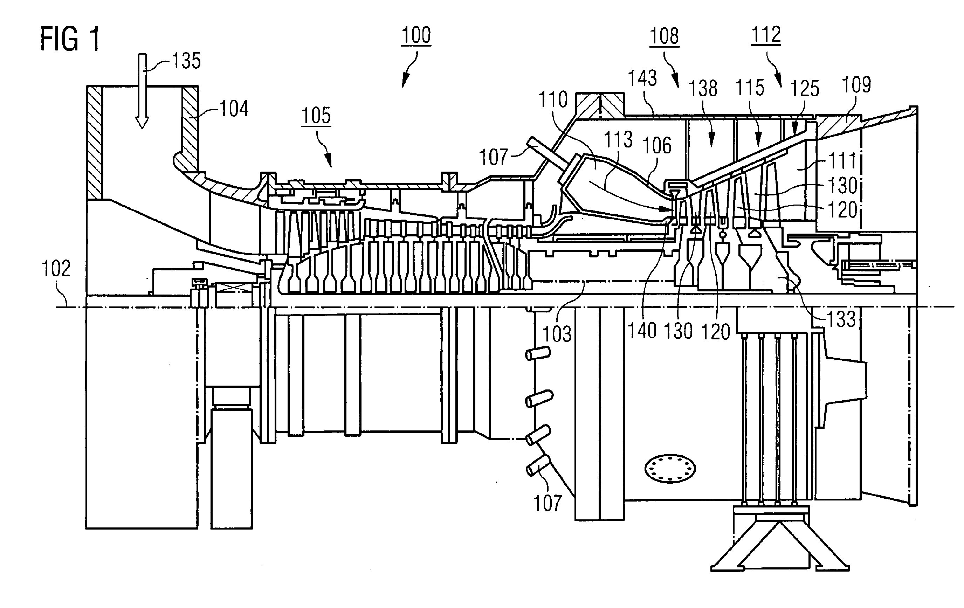

Die Figur 1 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

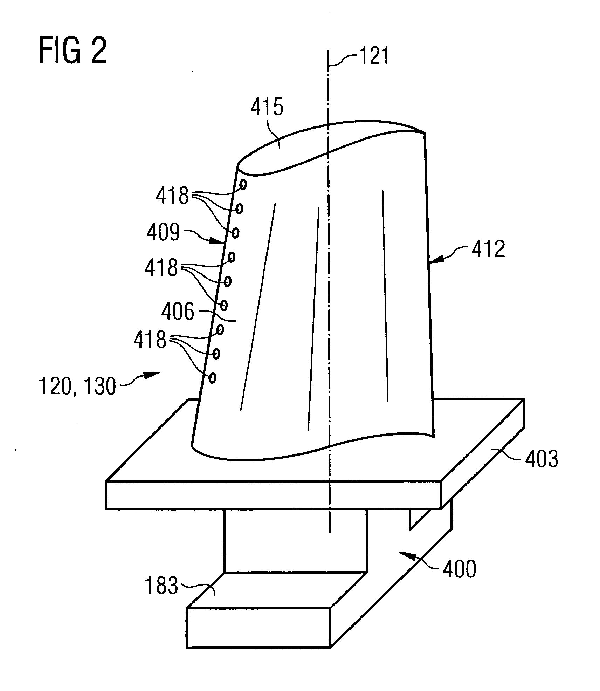

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Die Dichte liegt vorzugsweise bei 95% der theoretischen Dichte.

Auf der MCrAIX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11A1-0,4Y-2Re oder Ni-25Co-17Cr-10Al-0,4Y-1,5Re.

Auf der MCrAIX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

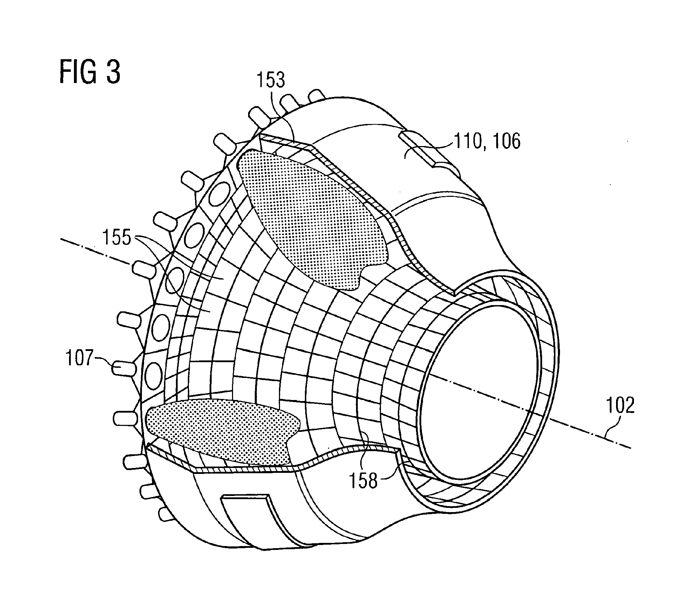

Die Figur 3 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Die erfindungsgemäße wärmehärtende Beschichtungszusammensetzung umfasst Aluminiumpartikel und ein Bindemittel. Zum Herstellen der wärmehärtenden Beschichtungszusammensetzung, die bspw. als Korrosions- und/oder Verschleißschutzschicht auf eine Verdichterschaufel aufgebracht werden kann, wird im vorliegenden Ausführungsbeispiel zuerst das Bindemittel hergestellt. Das Bindemittel umfasst neben Phosphorsäure und Wasser wenigstens einen weiteren Bestandteil, der ausgewählt ist aus der Gruppe bestehend aus Wolfram-(VI)-Verbindungen, Vanadin-(V)-Verbindungen, Niob-(V)-Verbindungen, Tantal-(V)-Verbindungen, Technetium-(VII)-Verbindungen, Rhenium-(VII)-Verbindungen und Cer-(IV)-Verbindungen sowie Gemischen aus diesen Verbindungen. Dieser Bestandteil dient zum Schutz des Aluminiums vor Oxidation. Gleichzeitig findet er im vorliegenden Ausführungsbeispiel dazu Verwendung, der wärmeaushärtenden Beschichtungszusammensetzung eine speziell ausgewählte Farbe zu geben. Zusätzlich zu dem Bestandteil aus der genannten Gruppe kann das Bindemittel außerdem im vorliegenden Ausführungsbeispiel Molybdän-(VI)-Verbindungen bspw. Molybdänsäure als einen weiteren Bestandteil umfassen. Auch die Molybdänsäure verhindert eine Oxidation des Aluminiums und kann zur Farbgebung Verwendung finden.

Anschließend werden im vorliegenden Ausführungsbeispiel dem Bindemittel Aluminiumpulver und ein farbneutrales Metalloxidpulver mit mikroskaligen und/oder nanoskaligen Pulverpartikeln beigemischt, um eine spezielle Farbgebung der Beschichtungszusammensetzung zu erzielen. Die Metalloxidpartikel dienen dabei als Träger der entstehenden Farbpigmente.

In den nachfolgenden konkreten Beispielen soll insbesondere die Farbgebung anhand des Bestandteils aus der genannten Gruppe herausgestellt werden. Es soll jedoch an dieser Stelle angemerkt werden, dass die Bestandteile aus der Gruppe auch alleine als Oxidationsschutz für das Aluminium beigefügt werden können. In diesen Fall kann die Zugabe des farbneutralen Metalloxidpulvers unterbleiben.

In einem ersten konkreten Beispiel für die erfindungsgemäße Beschichtungszusammensetzung umfasst das Bindemittel Phosphorsäure, Wasser und Wolframsäure (H₂WO₄) als Wolfram-(VI)-Verbindung. Das Herstellen des Bindemittels erfolgt, indem zuerst das Wasser mit der Wolframsäure gemischt und anschließend Phosphorsäure zugegeben wird, bis die Zusammensetzung einen pH-Wert von ca. 2 erreicht. Dem so hergestellten Bindemittel werden dann zum Herstellen der Beschichtungszusammensetzung das Aluminiumpulver sowie ein farbneutrales Metalloxidpulver mit Pulverpartikeln im Nanometerbereich und/oder Mikrometerbereich beigemischt. Die Aluminiumpartikel im Aluminiumpulver werden dabei zu ca. 0,5 bis 2% ihrer Gesamtkonzentration zu Al³⁺ oxidiert, wobei die Wolframsäure zu WO₃₋ₓ(OH)ₓ(HₓWO₃) reduziert wird. Je nach Wert des Anteils x färbt sich das Bindemittel hierbei blauviolett (x=0,3) bis goldgelb (x=0,9). In einer Abwandlung dieses Beispiels kann statt der Wolframsäure ein Wolframat als Wolfram-(VI)-Verbindung zur Anwendung kommen. Die farbneutralen Metalloxidpartikel dienen als Trägerpartikel für die entstandenen Farbpigmente.

In einem zweiten konkreten Beispiel für die erfindungsgemäße Beschichtungszusammensetzung umfasst das Bindemittel neben Phosphorsäure und Wasser Vanadiumpentoxid (V₂O₅) als Vanadin-(V)-Verbindung. Das Herstellen des Bindemittels erfolgt, indem zuerst Wasser mit dem Vanadiumpentoxid gemischt und anschließend Phosphorsäure zugegeben wird, bis die Zusammensetzung einen pH-Wert von ca. 2 erreicht. Dem so hergestellten Bindemittel wird dann zum Herstellen der Beschichtungszusammensetzung Aluminiumpulver und ein farbneutrales Metalloxidpulver mit Pulverpartikeln im Nanometerbereich und/oder Mikrometerbereich beigemischt. Bei Zugabe der Aluminiumpartikel gehen die Vanadin-(V)-Verbindungen, im vorliegenden Beispiel also das Vanadiumpentoxid, je nach pH-Wert des Bindemittels in die verschieden gefärbten Vanadin-(IV)-Verbindungen oder Vanadin-(III)-Verbindungen über. Gleichzeitig werden ca. 0,5 bis 2% der Gesamtkonzentration an Aluminiumteilchen zu A1³⁺ oxidiert. Im vorliegenden konkreten Beispiel, in dem ein pH-Wert von 2 vorliegt, erhält man blaues [VO(H₂O)₅]²⁺. Bei pH-Werten, die näher am neutralen Bereich liegen, erhält man grünes, lösliches Vanadintrioxid (V₂O₃). Die Vanadin-(IV)-Verbindungen oder die Vanadin-(III)-Verbindungen lagern sich dann auf den Metalloxidpartikeln ab.

In einem dritten konkreten Beispiel für die erfindungsgemäße Beschichtungszusammensetzung umfasst das Bindemittel neben Phosphorsäure und Wasser Diniobpentoxid (Nb₂O₅) als Niob-(V)-Verbindung. Das Herstellen des Bindemittels erfolgt, indem zuerst Wasser mit dem Diniobpentoxid gemischt und anschließend Phosphorsäure zugegeben wird, bis die Zusammensetzung einen pH-Wert von ca. 2 erreicht. Dem so hergestellten Bindemittel wird dann zum Herstellen der Beschichtungszusammensetzung das Aluminiumpulver und farbneutrales Metalloxidpulver mit Pulverpartikeln im Nanometerbereich und/oder Mikrometerbereich beigemischt. Bei der Zugabe des Aluminiums wird das Diniobpentoxid zu schwarzblauem Niobdioxid (NbO₂), zu Diniobtrioxid (Nb₂O₃) oder zu schwarzem bzw. grauem Nioboxid (NbO) reduziert.

Gleichzeitig wird ca. 0,5 bis 2% der Gesamtkonzentration an Aluminium zu A1³⁺ oxidiert. Die genannten Oxide können sich dann auf den Metalloxidpartikeln ablagern.

In einem vierten konkreten Beispiel für die erfindungsgemäße Beschichtungszusammensetzung umfasst das Bindemittel neben Phosphorsäure und Wasser Ditantalpentoxid (Ta₂O₅) als eine Tantal-(V)-Verbindung. Das Herstellen des Bindemittels erfolgt, indem zuerst Wasser mit dem Ditantalpentoxid gemischt und anschließend Phosphorsäure zugegeben wird, bis die Zusammensetzung einen pH-Wert von ca. 2 erreicht. Dem so hergestellten Bindemittel werden dann zum Herstellen der Beschichtungszusammensetzung das Aluminiumpulver sowie ein farbneutrales Metalloxidpulver mit Pulverpartikeln im Nanometerbereich und/oder Mikrometerbereich beigemischt. Bei Zugabe der Aluminiumpartikeln wird das Ditantalpentoxid zu grauem oder braunem Tantaldioxid (TaO₂). Gleichzeitig wird ca. 0,5 bis 2% der Gesamtkonzentration an Aluminium zu Al³⁺ oxidiert. Das aus diesem Prozess resultierende Tantaldioxid kann sich auf den Metalloxidpartikeln ablagern.

In einem fünften konkreten Beispiel für die erfindungsgemäße Beschichtungszusammensetzung enthält das Bindemittel neben Phosphorsäure und Wasser Ditechnetiumheptoxid (Tc₂O₇) als eine Technetium-(VII)-Verbindung. Das Herstellen des Bindemittels erfolgt, in dem zuerst Wasser mit dem Ditechnetiumheptoxid gemischt und anschließend Phosphorsäure zugegeben wird, bis die Zusammensetzung einen pH-Wert von ca. 2 erreicht. Dem so hergestellten Bindemittel wird dann zum Herstellen der Beschichtungszusammensetzung das Aluminiumpulver sowie ein farbneutrales Metalloxidpulver mit Pulverpartikeln im Nanometerbereich und/oder Mikrometerbereich beigemischt. Bei Zugabe des Aluminiums wird das Ditechnetiumheptoxid zu schwarzem Technetiumdioxid (TcO₂) reduziert. Gleichzeitig wird ca. 0,5 bis 2% der Gesamtkonzentration an Aluminium zu Al³⁺ oxidiert. Das farbneutrale Metalloxidpulver dient dann als Träger für das schwarze Technetiumdioxid. In einer Abwandlung dieses Beispiels findet statt dem Ditechnetiumheptoxid Pertechnat (TcO₄-) als Technetium-(VII)-Verbindung Verwendung. Auch dieses wird bei Zugabe des Aluminiumpulvers zu schwarzem Technetiumdioxid reduziert.

In einem sechsten konkreten Beispiel für die erfindungsgemäße Beschichtungszusammensetzung umfasst das Bindemittel neben Phosphorsäure und Wasser Dirheniumheptoxid als eine Rhenium-(VII)-Verbindung. Das Herstellen des Bindemittels erfolgt, indem zuerst Wasser mit dem Dirheniumheptoxid gemischt und anschließend Phosphorsäure zugegeben wird, bis die Zusammensetzung einen pH-Wert von ca. 2 erreicht. Dem so hergestellten Bindemittel wird dann zum Herstellen der Beschichtungszusammensetzung Aluminiumpulver und ein farbneutrales Metalloxidpulver mit Pulverpartikeln im Nanometerbereich und/oder Mikrometerbereich beigemischt. Beim Beimischen des Aluminiumpulvers wird das Dirheniumheptoxid zu rotem Rheniumtrioxid (ReO₃) oder grauem bis schwarzbraunem Rheniumdioxid (ReO₂) reduziert. Gleichzeitig wird ein Anteil von ca. 0,5 bis 2% der Gesamtkonzentration an Aluminium zu A1³⁺ oxidiert. Die farbneutralen Metalloxidpulverpartikel dienen als Träger für das Rheniumtrioxod bzw. Rheniumdioxid. In einer Abwandlung dieses Beispiels findet Perrhenat (ReO₄-) statt Dirheniumheptoxid als Rhenium-(VII)-Verbindung Verwendung. Auch dieses wird bei Zugabe des Aluminiumpulvers zu rotem Rheniumtrioxid oder zu grauem bis schwarzbraunem Rheniumoxid reduziert.

In einem siebten konkreten Beispiel für die erfindungsgemäße Beschichtungszusammensetzung umfasst das Bindemittel neben der Phosphorsäure und Wasser Ceroxid (CeO₂) als eine Cer-(IV)-Verbindung. Das Herstellen des Bindemittels erfolgt, indem zuerst Wasser mit Ceroxid gemischt und anschließend Phosphorsäure zugegeben wird, bis die Zusammensetzung einen pH-Wert von ca. 2 erreicht. Dem so hergestellten Bindemittel wird dann zum Herstellen der Beschichtungszusammensetzung Aluminiumpulver und ein farbneutrales Metalloxidpulver mit Pulverpartikeln im Nanometerbereich und/oder Mikrometerbereich beigemischt. Beim Beimischen des Aluminiumpulvers wird das Ceroxid zu gelblich-grünem Dicertrioxid (Ce₂O₃) reduziert. Gleichzeitig wird ein Anteil von ca. 0,5 bis 2% der Gesamtkonzentration an Aluminium zu A1³⁺ oxidiert. Die Metalloxidpulverpartikel dienen als Trägermaterial für das gelblichgrüne Dicertrioxid.

Anhand der konkreten Beispiele wurde dargelegt, dass die Farbe der wärmehärtenden Beschichtungszusammensetzung durch geeignete Wahl des weiteren Bestandteils des Bindemittels in einem weiten Bereich variiert werden kann. Dabei ist es auch möglich, statt eines einzigen Bestandteils ein Gemisch aus zwei oder mehr Bestandteilen zu verwenden und so eine Beschichtungszusammensetzung zu erhalten, deren Farbe einer Farbmischung derjenigen Beschichtungszusammensetzungen entspricht, die mit den einzelnen Bestandteilen alleine erzielt worden wären.

Zusätzlich zu den Bestandteilen aus der genannten Gruppe kann das Bindemittel in den konkreten Beispielen außerdem eine Molybdän-(VI)-Verbindung, bspw. Molybdänsäure, umfassen. Bei Zugabe des Aluminiums zu dem Bindemittel wird ein Teil der Molybdänsäure zu HMoO₃ reduziert, wobei gleichzeitig ca. 0,5 bis 2% der Gesamtkonzentration an Aluminium zu Al³⁺ oxidiert wird. Das HMoO₃ hat eine tiefblaue Farbe, die sich auf den farbneutralen Metalloxidpartikeln ablagern kann. Zudem ermöglicht die Zugabe von Molybdänsäure, die Beschichtungszusammensetzung besonders gut im spritzfähigen Zustand zu halten.

Die beschriebenen wärmehärtenden Beschichtungszusammensetzungen können zum Herstellen von Haftvermittlerschichten und/oder Korrosionsschutzschichten und/oder Verschleißschutzschichten auf Turbinenbauteilen Verwendung finden. Diese werden auf das Turbinenbauteil aufgespritzt.

Das Herstellen der Schutzschicht auf dem Turbinenbauteil, die bspw. eine Korrosionsschutzschicht auf einer Verdichterschaufel für einen Gasturbinenkompressor sein kann, erfolgt durch Aufspritzen einer wärmehärtenden Beschichtungszusammensetzung auf das Werkstück und anschließendes Durchführen einer Wärmebehandlung mit einem Temperaturschritt von mindestens 300°C. Dabei härtet die aufgebrachte Beschichtungszusammensetzung aus, so dass eine harte Beschichtung mit ebener Oberfläche entsteht.

Die Menge des Bestandteils, der aus der Gruppe ausgewählt ist, die aus Wolfram-(VI)-Verbindungen, Vanadin-(V)-Verbindungen, Niob-(V)-Verbindungen, Tantal-(V)-Verbindungen, Technetium-(VII)-Verbindungen, Rhenium-(VII)-Verbindungen und Cer-(IV)-Verbindungen sowie Gemischen aus diesen Verbindungen besteht, ist dabei so gewählt, dass die entstehende Suspension, die die wärmehärtende Beschichtungszusammensetzung bildet, in einem spritzbar flüssigen Zustand verbleibt. Durch geeignete Auswahl des Bestandteils aus der genannten Gruppe kann zudem eine wärmehärtende Beschichtungszusammensetzung hergestellt werden, die sich für eine Farbkodierung der Beschichtungszusammensetzung und/oder des beschichteten Turbinenbauteils verwenden lässt. Bei mehrlagigem Beschichtungsaufbau können bspw. die unterschiedlichen Beschichtungslagen mit unterschiedlichen Farbgebungen ausgestattet werden, so dass der Verschleißzustand der Beschichtung alleine anhand der Farbe der sichtbaren Beschichtungsschicht des Turbinenbauteils ermittelt werden kann.

## Patentansprüche

1. Wärmehärtende Beschichtungszusammensetzung, welche ein säurehaltiges Bindemittel und Aluminiumpartikel umfasst, wobei das Bindemittel Phosphorsäure und Wasser umfasst,
**dadurch gekennzeichnet,**
**dass** das Bindemittel außerdem einen Bestandteil umfasst, der ausgewählt ist aus der Gruppe bestehend aus Wolfram-(VI)-Verbindungen, Vanadin-(V)-Verbindungen, Niob-(V)-Verbindungen, Tantal-(V)-Verbindungen, Technetium-(VII)-Verbindungen, Rhenium-(VII)-Verbindungen und Cer-(IV)-Verbindungen sowie Gemischen aus diesen Verbindungen.

2. Wärmehärtende Beschichtungszusammensetzung nach Anspruch 1,
**dadurch gekennzeichnet, dass**
die Wolfram-(VI)-Verbindungen Wolframsäure oder Wolframat umfassen.

3. Wärmehärtende Beschichtungszusammensetzung nach Anspruch 1 oder Anspruch 2,
**dadurch gekennzeichnet, dass**
die Vanadin-(V)-Verbindungen Vanadinpentoxid umfassen.

4. Wärmehärtende Beschichtungszusammensetzung nach einem der vorausgehenden Ansprüche,
**dadurch gekennzeichnet, dass**
die Niob-(V)-Verbindungen Niobpentoxid umfassen.

5. Wärmehärtende Beschichtungszusammensetzung nach einem der vorausgehenden Ansprüche,
**dadurch gekennzeichnet, dass**
die Tantal-(V)-Verbindungen Tantalpentoxid umfassen.

6. Wärmehärtende Beschichtungszusammensetzung nach einem der vorausgehenden Ansprüche,
**dadurch gekennzeichnet, dass**
die Technetium-(VII)-Verbindungen Ditechnetiumheptoxid oder Pertechnat umfassen.

7. Wärmehärtende Beschichtungszusammensetzung nach einem der vorausgehenden Ansprüche,
**dadurch gekennzeichnet, dass**
die Rhenium-(VII)-Verbindungen Dirheniumheptoxid und/oder Perrhenat umfassen.

8. Wärmehärtende Beschichtungszusammensetzung nach einem der vorausgehenden Ansprüche,
**dadurch gekennzeichnet, dass**
die Cer-(IV)-Verbindungen Ceroxid umfassen.

9. Wärmehärtende Beschichtungszusammensetzung nach einem der vorausgehenden Ansprüche,
**dadurch gekennzeichnet, dass**
sie wenigstens ein pulverförmiges Metalloxid umfasst.

10. Wärmehärtende Beschichtungszusammensetzung nach Anspruch 9,
**dadurch gekennzeichnet, dass**
das wenigstens eine pulverförmige Metalloxid ausgewählt ist aus der Gruppe bestehend aus Magnesiumoxid, Aluminiumoxid, Titanoxid, Zinkoxid und Zirkonoxid sowie Gemischen dieser Oxide.

11. Wärmehärtende Beschichtungszusammensetzung nach Anspruch 9 oder 10,
**dadurch gekennzeichnet, dass**
das wenigstens eine pulverförmige Metalloxid in Form von Nanoteilchen und/oder Mikroteilchen vorliegt.

12. Wärmehärtende Beschichtungszusammensetzung nach einem der vorausgehenden Ansprüche,
**dadurch gekennzeichnet, dass**
das Bindemittel zusätzlich eine Molybdän-(VI)-Verbindung als einen Bestandteil umfasst.

13. Verwendung einer wärmehärtenden Beschichtungszusammensetzung nach einem der vorangehenden Ansprüche zur Herstellung einer Beschichtungsschicht auf einem Turbinenbauteil mittels eines Spritzverfahrens.

14. Verwendung nach Anspruch 13, in der durch gezielte Auswahl des Bestandteils aus der Gruppe bestehend aus Wolfram-(VI)-Verbindungen, Vanadin-(V)-Verbindungen, Niob-(V)-Verbindungen, Tantal-(V)-Verbindungen, Technetium-(VII)-Verbindungen, Rhenium-(VII)-Verbindungen und Cer-(IV)-Verbindungen sowie Gemischen aus diesen Verbindungen und ggf. Molybdän-(VI)-Verbindung ein gezieltes Einstellen der Farbe der Beschichtungszusammensetzung erfolgt.

15. Verwendung nach Anspruch 14, in der zwei wärmehärtende Beschichtungszusammensetzungen mit unterschiedlicher Farbe zur Herstellung einer ersten Beschichtungsschicht und einer zweiten, auf der ersten Beschichtungsschicht aufgebrachten Beschichtungsschicht mit einer zweiten Farbe zur Anwendung kommen.
